# EUROPÄISCHE PATENTSCHRIFT

(11) **EP 1 982 391 B1**
(45) Veröffentlichungstag und Bekanntmachung des Hinweises auf die Patenterteilung: **25.08.2010**
(21) Anmeldenummer: 07702722.5
(22) Anmeldetag: 12.01.2007
(51) Int. Cl.: H01R 13/66, H01F 38/14

(54) **STECKVERBINDUNGSSYSTEM ZUR ÜBERTRAGUNG VON DATEN- UND ENERGIEVERSORGUNGSSIGNALEN**
PLUG-IN CONNECTION SYSTEM FOR THE TRANSMISSION OF DATA AND ENERGY SUPPLY SIGNALS
SYSTÈME DE CONNEXION ENFICHABLE POUR LA TRANSMISSION DE SIGNAUX DE DONNÉES ET D'ALIMENTATION EN ÉNERGIE

(30) Priorität: 08.02.2006 DE 102006005633
(43) Veröffentlichungstag der Anmeldung: 22.10.2008
(73) Patentinhaber: Knick Elektronische Messgeräte GmbH & Co. KG, 14163 Berlin (DE)
(72) Erfinder: FEUCHT, Wolfgang, 14165 Berlin (DE); GIEBSON, Jörg, 14476 Satzkorn (DE)
(74) Vertreter: Hübner, Gerd
(86) Internationale Anmeldenummer: PCT/EP2007/000249
(87) Internationale Veröffentlichungsnummer: WO 2007/090499

(56) Entgegenhaltungen:
- DE-A1- 4 344 071
- DE-C1- 19 719 730
- DE-U1- 20 202 447
- DE-U1-202004 003 918
- US-A1- 2005 194 296

## Beschreibung

Die Erfindung betrifft ein Steckverbindungssystem zur kontaktlosen Übertragung von Daten- und Energieversorgungssignalen zwischen einer Sensoreinrichtung und einer Basiseinheit in einem Mess- und Übertragungssystem mit den im Oberbegriff des Patentanspruches 1 angegebenen Merkmalen. Wenn dabei von einem "Verbindungssystem" die Rede ist, so sollen darunter alle möglichen mechanisch und elektrisch verbind- und trennbaren Kopplungsmechanismen gemeint sein, wobei Steckverbinder mit Steck- und Buchsenelement natürlich die in der Elektrotechnik gebräuchlichsten Vertreter solcher Verbinder darstellen. Diese können direkt kontaktierend, aber auch kontaktlos, wie induktiv, kapazitiv oder optisch ausgelegt sein.

Die kontaktlose Übertragung von Schaltsignalen und Wechselspannungen in Telekommunikations- und Datenübertragungssystemen ist beispielsweise aus der DE 195 40 854 A1 in Form eines elektromagnetischen Mehrfachkopplers bekannt. Die dabei verwendeten kontaktfreien und passiven Übertragungsmittel des Mehrfachkopplers ersetzen Steckverbindungen und ermöglichen die galvanische Trennung der elektrischen Signale zwischen beispielsweise einem Hauptgerät der Telekommunikations- und Datenübertragungstechnik und einem außenliegenden Bediengerät, wie es beispielsweise in explosionsgefährdeten Anwendungsbereichen, wie Treibstofflager, Erdölförderanlagen und Erdölverarbeitungsanlagen eingesetzt werden soll.

Die DE 100 55 090 A1 offenbart ein Steckverbindungssystem zum Anschluss einer Übertragungsleitung an einen Sensor, das ebenfalls kontaktlos arbeitet und mit einer steckerinternen Elektronik versehen ist. Die Signalübertragung erfolgt auf induktivem Wege, wobei das übertragene Signal ein Versorgungsspannungs- und Messsignal in überlagerter Form umfasst.

Der nächstkommende Stand der Technik ist durch die DE 197 19 730 C1 repräsentiert, die sich ebenfalls mit einem Steckverbindungssystem zur kontaktlosen Übertragung von Daten- und Energieversorgungssignalen zwischen einer Sensoreinrichtung und einer Basiseinheit in einem Mess- und Übertragungssystem beschäftigt. Dabei ist eine Sensoreinrichtung beispielsweise für einen Temperaturfühler mit einem sensorseitigen Steckverbindungselement gekoppelt. Die Sensoreinrichtung verfügt über eine gewisse "Intelligenz", da sie einen AD-Wandler für das Messsignal des den Messsensor repräsentierenden Thermopaares und eine diesem nachgeschaltete mikroprozessorgestützte Steuer- und Speichereinheit aufweist. Im sensorseitigen Steckverbindungselement, das mit der Sensoreinrichtung gekoppelt ist, ist eine Daten-Modulator-Demodulator-Einheit in Kombination mit einem Energiesignalempfänger vorgesehen, die mit einem ersten Koppelpartnerelement einer induktiven Kopplung zur kontaktlosen Übertragung von Daten- und Energieversorgungssignalen verbunden ist. Das zweite Koppelpartnerelement der induktiven Kopplungsstrecke sitzt im basisseitigen Steckverbindungselement, das daten- und energieversorgungstechnisch an die entsprechenden Leitungen eines Bussystems angebunden ist. In diesem basisseitigen Steckverbindungselement ist wiederum kombiniert eine Daten-Modulator-Demodulator-Einheit mit Energiesignalsender vorgesehen, die über die vom Bussystem herrührende Primärstromversorgung für eine Spannungsversorgung des Sensorsystems sorgt.

Zum Hintergrund der Erfindung ist darauf hinzuweisen, dass derartige Mess- und Übertragungssysteme vielfach in rauer Industrieumgebung, wie beispielsweise in großtechnischen chemischen Prozessanlagen, eingesetzt werden. Die Messstellen sind dabei oftmals von der zentralen Leitwarte weit entfernt. Problematisch für das Prozessbedienungspersonal ist daher die Tatsache, dass vor Ort an einer Messstelle in der Regel nicht erkennbar ist, ob das Steckverbindungssystem einwandfrei arbeitet, insbesondere ob das Mess- und Übertragungssystem für die abzugreifenden Messgrößen sich in einem ordnungsgemäßen Betriebszustand befindet. Dies kann ggf. nur über die Leitwarte abgefragt werden.

Die DE 202 02 447 U1, DE 20 2004 003 918 U1 und die US 2005/0194296 A1 geben technologischen Hintergrund bei der Übertragung von Mess-Signalen wieder."

Ausgehend von den oben geschilderten Problemen des Standes der Technik liegt der Erfindung die Aufgabe zugrunde, ein Steckverbindungssystem zur kontaktlosen Übertragung von Daten- und Energieversorgungssignalen anzugeben, bei dem am Verbindungssystem selbst erkennbar ist, ob das damit angekoppelte Mess- und Übertragungssystem ordnungsgemäß arbeitet.

Diese Aufgabe wird durch die im Kennzeichnungsteil des Anspruchs 1 angegebenen Merkmalen gelöst, wonach eine optische Diagnose-Anzeigeeinheit in mindestens einem der Verbindungselemente vorgesehen ist, die definierte Zustandsparameter innerhalb des Mess- und Übertragungssystems visualisiert. Bei solchen Zustandsparametern kann es sich beispielsweise um den Spannungsversorgungszustand, das Datenübertragungsverhalten oder den Sensorzustand des Mess- und Übertragungssystems handeln. Insbesondere im Hinblick auf die Überwachung des Sensorzustands und dessen Visualisierung kann das Verbindungssystem so "intelligent" ausgelegt sein, dass es die Testroutinen für die Ermittlung des Sensorzustandes von seiner Steuer- und Speichereinheit initiieren lässt. Grundsätzlich kann die optische Diagnose-Anzeigeeinheit auf einer oder mehreren Leuchtdioden basieren, wobei unterschiedliche Zustandsparameter des Mess- und Übertragungssystems durch unterschiedliche Farbgebung und/oder Blinkfrequenzen des Visualisierungssignals anzeigbar sind. So können auch mehrere, den Grundfarben Rot, B lau und Grün entsprechende Leuchtdioden in der optischen Diagnose-Anzeigeeinheit vorgesehen sein. Diese sind nach dem Prinzip der additiven Farbmischung zur Generierung eines beliebig-farbigen Visualisierungssignals ansteuerbar.

Bei einer pH-Messstelle etwa könnte die Farbe des Leuchtdiodenmoduls in Abhängigkeit von der gemessenen Wasserstoffionenkonzentration angesteuert werden. Damit kann die optische Diagnose-Anzeigeeinheit dem sogenannten Lackmus-Test nachempfunden werden. Bei einem niedrigen gemessenen pH-Wert leuchtet die optische Diagnose-Anzeigeeinheit rot, bei hohem pH-Wert blau.

Andere optische Anzeigen, wie beispielsweise LCD-Displays, die gegebenenfalls Fehler- oder Statuscodes bzw. gleich Klartextmeldungen ausgeben, sind ebenfalls einsetzbar.

Die optische Diagnose-Anzeigeeinheit kann in einer bevorzugten Weiterbildung ferner als zusätzliche Schnittstelle zur optischen Datenübertragung verwendet werden. Dazu ist das das Visualisierungssignal darstellende sichtbare Licht zusätzlich amplituden-, frequenz- oder phasenmoduliert, sodass mittels einer Zusatzvorrichtung die so repräsentierten Daten empfangen und weiter ausgewertet werden können.

In einer weiteren bevorzugten Ausführungsform kann das Verbindungssystem zusätzlich mit einer Schnittstelle zur drahtlosen Datenkommunikation mit einer separaten Instanz, wie z. B. einem PDA, MDA, PC Laptop und dergleichen ausgestattet sein. Die Schnittstelle kann als Funk- oder Infrarotschnittstelle ausgeführt werden, wobei die Infrarot-Übertragung (IrDA) gegenüber Funklösungen, wie beispielsweise Bluetooth, signifikante Vorteile, wie einen geringeren Energiebedarf und eine hohe Sicherheit der Datenübertragung durch den direkten optischen Übertragungsweg sowie einen unkomplizierten Verbindungsaufbau, zeigt. Zudem gehört eine solche Schnittstelle heute bereits zur Grundausstattung vieler Kommunikationsgeräte.

Bevorzugte Ausführungsformen bezüglich der Positionierung der Diagnose-Anzeige-Einheit bzw. der Leuchtdioden sehen eine Anordnung auf einer im Inneren des Verbindungssystems angeordneten Leiterplatte vor, wobei das Visualisierungssignal über Fenster im Gehäuse des Verbindungssystems von außen erkennbar ist. Ein solches Fenster kann vorzugsweise ein Ringfenster sein, das im sensorabseitigen Gehäuseabschnitt des Verbindungssystems vorgesehen ist. Damit ist das Visualisierungssignal der Diagnose-Anzeige-Einheit einerseits von allen radialen Raumrichtungen aus, andererseits auch dann von hinten sichtbar, wenn das Verbindungssystem beispielsweise in einem sogenannten Tauchrohr montiert ist und dadurch keine seitliche Sicht auf den Verbinder gegeben ist.

Weitere Merkmale, Vorteile und Einzelheiten des Erfindungsgegenstandes ergeben sich aus der nachfolgenden Beschreibung, in der ein Ausführungsbeispiel anhand der beigefügten Zeichnungen näher erläutert wird. Es zeigen:
- Fig. 1 und 2: Seitenansichten eines Steckverbindungssystems in gekoppel- tem und gelöstem Zustand,
- Fig. 3: ein Blockdiagramm des internen Aufbaus des Steckverbin- dungssystems, und
- Fig. 4: einen Axialschnitt eines Buchsenelements des Steckverbin- dungssystems.

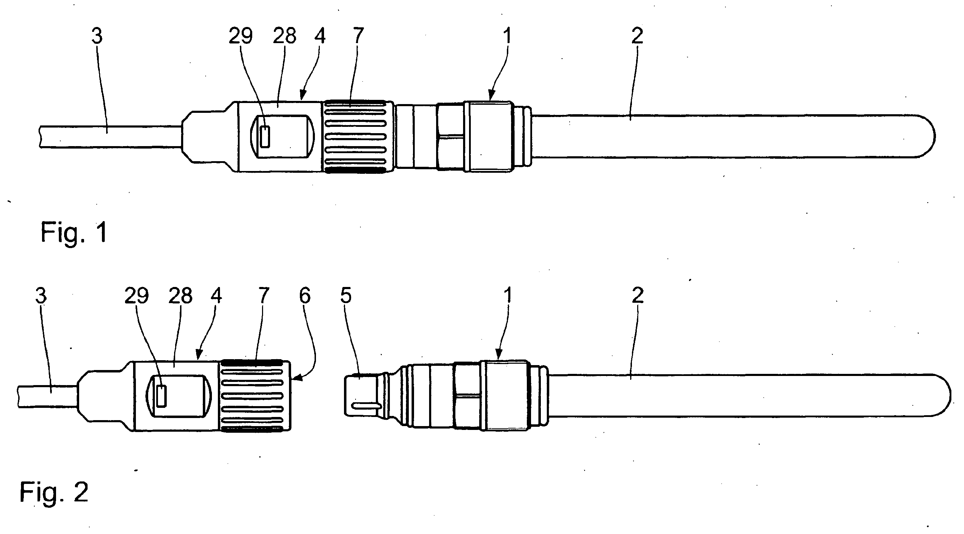

Das in den Fig. 1 und 2 gezeigte Steckverbindungssystem umfasst ein sensorseitiges Steckerelement 1, an dem direkt eine hier schematisch röhrenförmig gezeigte Sensoreinrichtung 2 befestigt ist. Es kann sich dabei z. B. um eine pH-Messsonde mit Temperaturerfassung, aber auch um beliebig andere Sensoren, wie beispielsweise eine Sauerstoff- oder Leitfähigkeits-Messsonde handeln. Die Sensoreinrichtung 2 sitzt dabei in dem zu überwachenden Prozess. Um die Messdaten an eine entsprechende Basiseinheit, wie beispielsweise ein Feldbusgerät weiterzuleiten, wird über das erfindungsgemäße Steckverbindungssystem eine Daten- und Versorgungsleitung 3 zum Feldbusgerät angekoppelt. Die Datenleitung könnte dabei auch als zweiadrige Busleitung ausgeführt sein. Mit dem Steckerelement 1 kooperiert dabei das Buchsenelement 4, das eine dem Steckteil 5 des Steckelements 1 formangepasste Aufnahme 6 zur mechanischen und induktiven Kopplung zwischen Steckerelement 1 und Buchsenelement 2 aufweist. Die hier nicht näher zu beschreibende Verrastung zwischen dem Steckerelement 1 und dem Buchsenelement 4 wird durch eine Lösehülse 7 entarretiert, sodass das Steckverbindungssystem in die entkoppelte Stellung gemäß Fig. 2 verbringbar ist.

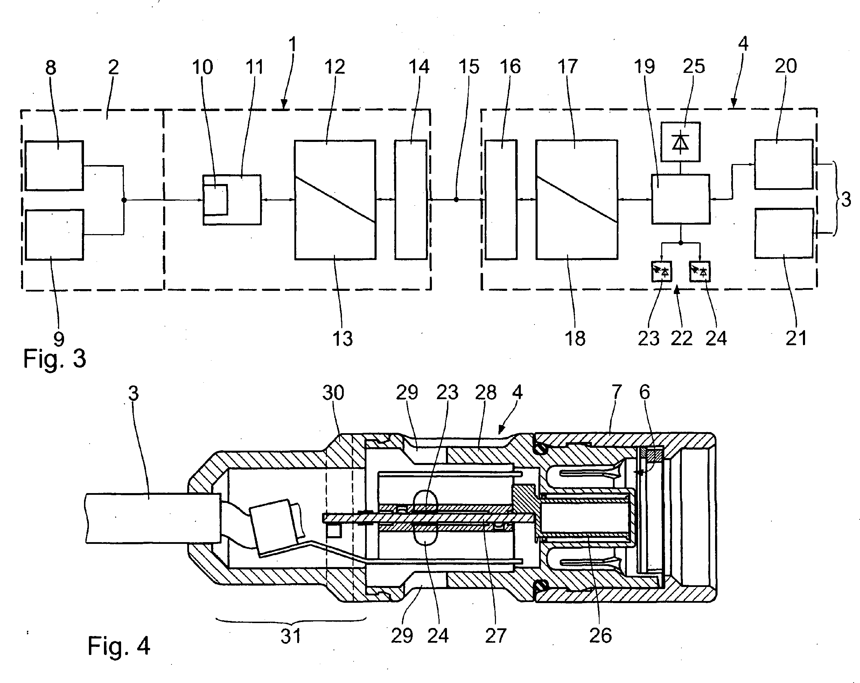

Aus den Fig. 3 und 4 ist der funktionale Aufbau des Steckverbindungssystems mit dem Steckerelement 1 und dem Buchsenelement 4 erkennbar. So weist die Sensoreinrichtung 2 beispielsweise einen Elementarsensor 8 zur Erfassung eines pH-Wertes und/oder eines Redox-Potentials einer Prozessflüssigkeit und einen Elementarsensor 9 zur Erfassung der Temperatur der Prozessflüssigkeit auf. Beide Sensoren 8, 9 liefern jeweils ein analoges Spannungssignal, das an den signaltechnisch angekoppelten AD-Wandler 10 in Steckerelement gegeben wird. Letzterer ist in einen Mikrocontroller 11 integriert, der als zentrale Steuer- und Speichereinheit für die grundsätzliche Steuerung, die Verarbeitung von Befehls- und Messdaten und deren Weitergabe in bekannter Weise funktional zuständig ist.

Im Steckerelement 1 ist ferner ein Schaltungskomplex mit Energiesignalempfänger 12 und Daten-Modulator-Demodulator-Einheit 13 sowie ein erstes Koppelpartnerelement 14 für die induktive kontaktlose Koppelstrecke 15 zwischen Steckerelement 1 und Buchsenelement 4 vorgesehen.

Das zweite Koppelpartnerelement 16 ist kopfseitig am Buchsenelement 4 angeordnet und steht mit einem Schaltungskomplex aus Energiesignalsender 17 und Modulator-Demodulator-Einheit 18 in Verbindung. Analog dem Steckerelement 1 übernimmt auch im Buchsenelement 4 ein Mikrocontroller 19 die zentralen Steuer- und Speicherausgaben im Zusammenhang mit der Energieversorgung und dem Datenaustausch des Steckverbindungssystems. Letzterer erfolgt über ein RS 485-Modem als Datenschnittstelle 20 zu einer nicht näher dargestellten Basiseinheit, wie beispielsweise einem Profibus-Feldgerät. Schließlich ist die gesamte Steckverbindungseinheit über eine Primärstromversorgung 21 mit Energie versorgt. Das gesamte Steckverbindungssystem mit der Sensoreinrichtung 2 genügt den Explosionsschutzbestimmungen.

Im Buchsenelement 4 ist schließlich eine als Ganzes mit 22 bezeichnete optische Diagnose-Anzeigeeinheit vorgesehen, die vom Mikrocontroller 19 angesteuert wird und im hier gezeigten Ausführungsbeispiel zwei Leuchtdioden 23, 24 umfasst. In noch näher zu erörternder Weise dienen diese beiden Leuchtdioden 23, 24 zur Visualisierung von Zustandsparametern innerhalb des Mess- und Übertragungssystems.

Bevor hierauf eingegangen wird, soll kurz die grundsätzliche Funktionsweise des Steckverbindungssystems, wie sie an sich aus dem Stand der Technik bekannt ist, umrissen werden. Ausgehend von der Sensorseite werden die von den beiden Elementarsensoren 8, 9 gelieferten Analogsignale im AD-Wandler 10 digitalisiert. Der Mikrocontroller 11 errechnet die entsprechenden Messwerte und gibt diese auf das den Energiesignalempfänger 12 und die Modulator-Demodulator-Einheit 13 realisierende Schaltungsteil aus. Dieses setzt die Digitalinformationen über die Messwerte in eine für die Übertragung über die induktive Koppelstrecke 15 geeignete Modulation um, wofür beispielsweise eine Amplituden-, Frequenz- oder Phasenmodulation in Frage kommen. Auf der Seite des Buchsenelements 4 werden die entsprechenden Digitalinformationen von der Modulator-Demodulator-Einheit 18 herausgefiltert und über die Datenschnittstelle 20 und die Busleitung 3 an ein Feldgerät zur Weiterverarbeitung übermittelt. Der Mikrocontroller 19 steuert dabei den Datenfluss, indem er beispielsweise die Datenschnittstelle 20 von Empfangen auf Senden schaltet.

Zur Spannungsversorgung des gesamten Steckverbindungssystems wird ausgehend von der basisseitigen Primärstromversorgung 21 über den Mikrocontroller 19 der Energiesignalsender 17 mit Modulator-Demodulator-Einheit 18 so gesteuert, dass über die Koppelstrecke 15 neben aufmodulierten Datensignalen, wie sie beispielsweise zur Parametrisierung der Sensoreinrichtung 2 dienen, auch Energieversorgungssignale, also beispielsweise eine Trägerspannung übertragen werden. Diese wird vom Energiesignalempfänger 12 mit Modulator-Demodulator-Einheit 13 so aufbereitet, dass daraus die gesamte Spannungsversorgung der Komponenten im Steckerelement 1 realisiert werden kann.

Der Kern der vorliegenden Erfindung liegt in der Diagnose-Anzeigeeinheit 22, die vom Mikrocontroller 19 gesteuert und als Statusanzeige zur Visualisierung von Zustandsparametern direkt am Steckverbindungssystem dient. Damit ist eine einfache Vor-Ort-Diagnose des in dem Steckverbindungssystem vorgesehenen Messsystems möglich.

So kann zum einen der ordnungsgemäße Zustand der Energieversorgung beispielsweise durch Dauerlicht der grünen Leuchtdiode 23 bzw. ein Spannungsausfall oder eine ungenügende Energieversorgung durch ein Ausschalten dieser LED 23 signalisiert werden. Eine fehlerfreie Datenübertragung innerhalb des Steckverbindungssystems über Steckerelement 1 und Buchsenelement 4 und auch eine fehlerfreie Datenübertragung zwischen dem Steckverbindungssystem selbst und dem Feldgerät als übergeordneter Basiseinheit kann durch Blinken der grünen Leuchtdiode 23 signalisiert werden. Eine gestörte Datenübertragung zwischen den beschriebenen Kommunikationspartnern kann beispielsweise mittels Dauer- oder Blinklicht der roten Leuchtdiode 24 dargestellt werden.

Ein weiterer Zustandsparameter, der visualisiert werden kann, ist beispielsweise der Sensorstatus. Dazu enthält das Steckerelement Mittel zur Funktionsüberwachung. Bei ionensensitiven Sensoren beispielsweise, die in der Regel aus einer hochohmigen Messelektrode und einer relativ niederohmigen Bezugselektrode bestehen, wird dazu der Innenwiderstand der Elektroden gemessen, indem Testspannungen den eigentlichen DC-Messsignalen überlagert werden. Aus der Beziehung zwischen Ausgangsspannung und Testspannung kann die Impedanz der hochohmigen Messelektrode bzw. der Bezugselektrode errechnet werden. Diese Berechnung kann von den Mikrocontrollern 11 bzw. 19 im Steckverbindungssystem selbst oder in einer gesonderten Basiseinheit, wie dem Feldgerät, durchgeführt werden. Wenn der ermittelte Innenwiderstand festgelegte Grenzen über- oder unterschreitet, ist dies ein Zeichen dafür, dass in einer der Elektroden ein Fehler aufgetreten ist. Diese Überprüfung erfolgt in aller Regel im Feldgerät, das im Fehlerfall eine entsprechende Fehlermeldung generiert und diese über die Datenschnittstelle 20 an das Buchsenelement 4 des Steckverbindungssystems weitergibt. Dessen Mikrocontroller 19 kann daraufhin die rote Leuchtdiode 24 ansteuern. Unterschiedliche Fehlerursachen, wie Störung der Datenübertragung oder Elektrodenfehler, können dann durch unterschiedliche Blinkfrequenzen der Leuchtdiode 24 visuell dargestellt werden.

Die Überprüfung von Fehlern und/oder Diagnosegrenzen kann auch direkt im Steckverbindungssystem über deren Mikrocontroller 11, 19 erfolgen. Das Steckverbindungssystem kann damit unabhängig vom Feldgerät Fehlermeldungen generieren und diese ebenfalls durch die Leuchtdioden 23, 24 anzeigen lassen.

Die Leuchtdioden 23, 24 können ferner auch zur Übertragung von Informationsdaten benutzt werden. Dazu wird ihre Ansteuerung vom Mikrocontroller 19 derart vorgenommen, dass das sichtbare LED-Licht für die Datenübertragung zusätzlich moduliert ist. Als Modulation kommen wiederum eine Amplituden-, Frequenz- oder Phasenmodulation in Frage. Mittels eines Zusatzgerätes können diese Daten dann aus dem LED-Signal extrahiert und weiter ausgewertet werden.

Schließlich zeigt Fig. 3 im Buchsenelement 4 noch eine separate Datenschnittstelle 25 in Form einer IrDA-Infrarotschnittstelle.

Anhand von Fig. 4 ist der innere mechanische Aufbau des Buchsenelementes 4 zu erläutern. So ist das zweite Koppelpartnerelement 16 in Form einer angedeuteten Induktionsspule 26 als Kern der ringförmigen Aufnahme 6 für das Steckteil 5 ausgelegt. Bei eingestecktem Steckteil 5 kommt eine entsprechende Ringspule im Kopf des Steckteils 5 radial außerhalb der Induktionsspule 26 zuliegen, womit die Koppelstrecke 15 gebildet ist.

Die elektronischen Komponenten des Buchsenelementes 4, wie sie anhand von Fig. 3 erörtert wurden, sind auf einer zentralen Leiterplatte 27 im Gehäuse 28 des Buchsenelements 4 angeordnet. Dazu gehören auch die beiden Leuchtdioden 23, 24, deren Lichtsignale über Fenster 29 im Gehäuse 28 des Buchsenelementes 4 erkennbar sind. Die Lichtleitung zwischen den LEDs 23, 24 und dem Fenster 29 kann über nicht näher dargestellte Lichtleiter in Form beispielsweise Y-förmiger Kunststoffkörper verbessert werden. Generell ist festzuhalten, dass alle lichtemittierenden Komponenten im Buchsenelement 4 über entsprechende Fenster im Gehäuse 28 einen Licht- bzw. Strahlungsaustausch ermöglichen müssen. Beispielhaft ist in Fig. 4 strichliert ein Ringfenster 30 im rückwärtigen Gehäuseabschnitt 31 angedeutet, über das in alle Radialrichtungen das Licht nicht näher dargestellter Leuchtdioden abgestrahlt werden kann.

## Patentansprüche

1. Steckverbindungssystem zur kontaktlosen Übertragung von Daten- und Energieversorgungssignalen zwischen einer Sensoreinrichtung (2) und einer Basiseinheit in einem Mess- und Übertragungssystem, umfassend
- ein sensorseitiges Verbindungselement (1) an dem eine Sensoreinrichtung (2) befestigt ist, mit
= einem Energiesignalempfänger (12),
= einer mit mindestens einem Messsensor (8, 9) der Sensoreinrichtung zumindest mittelbar signaltechnisch koppelbaren Daten-Modulator-Demodulator-Einheit (13), sowie
= einem ersten Koppelpartnerelement (14) zur kontaktlosen Übertragung von Daten- und Energieversorgungssignalen über eine Koppelstrecke (15),
- ein basisseitiges Verbindungselement (4), an dem eine Daten- und Versorgungsleitung (3) zu einer Basiseinheit angekoppelt ist, mit
= einem zweiten Koppelpartnerelement (16) der Koppelstrecke (15),
= einem Energiesignalsender (17),
= einer Daten-Modulator-Demodulator-Einheit (18),
= einer Datenschnittstelle (20), die mit der Basiseinheit datentechnisch verbindbar ist, sowie
= einer Primärenergieversorgung (21), und
- eine mikroprozessorgestützte Steuer- und Speichereinheit (19) in mindestens einem der Verbindungselemente (1, 4),
**gekennzeichnet durch**
- eine optische Diagnose-Anzeigeeinheit (22) in mindestens einem der Verbindungselemente (4) zur Visualisierung von Zustandsparametern innerhalb des Mess- und Übertragungssystems.

2. Steckverbindungssystem nach Anspruch 1, **dadurch gekennzeichnet, dass** die optische Diagnose-Anzeigeeinheit mindestens eine Leuchtdiode (23, 24) umfasst.

3. Steckverbindungssystem nach Anspruch 1 oder 2, **dadurch gekennzeichnet, dass** die optische Diagnose-Anzeigeeinheit (22) ein den Energieversorgungszustand des Mess- und Übertragungssystems repräsentierendes Signal generiert.

4. Steckverbindungssystem nach einem der vorgenannten Ansprüche, **dadurch gekennzeichnet, dass** die optische Diagnose-Anzeigeeinheit (22) ein das Datenübertragungsverhalten des Mess- und Übertragungssystems repräsentierendes Signal generiert.

5. Steckverbindungssystem nach einem der vorgenannten Ansprüche, **dadurch gekennzeichnet, dass** die optische Diagnose-Anzeigeeinheit (22) ein den Sensorzustand des Mess- und Übertragungssystems repräsentierendes Signal generiert.

6. Steckverbindungssystem nach Anspruch 5, **dadurch gekennzeichnet, dass** die Testroutinen für die Ermittlung des Sensorzustandes von der Steuer- und Speichereinheit (11, 19) eines der Verbindungselemente (1, 4) initiierbar sind.

7. Steckverbindungssystem nach einem der vorgenannten Ansprüche, **dadurch gekennzeichnet, dass** unterschiedliche Zustandsparameter des Mess- und Übertragungssystems durch unterschiedliche Farbgebung und/oder Blinkfrequenz des Visualisierungssignals der Diagnose-Anzeigeeinheit (22) anzeigbar sind.

8. Steckverbindungssystem mindestens nach Anspruch 2, **dadurch gekennzeichnet, dass** mehrere, den Grundfarben entsprechende Leuchtdioden in der optischen Diagnose-Anzeigeeinheit (22) vorgesehen sind, die nach dem Prinzip der additiven Farbmischung zur Generierung eines beliebig-farbigen Visualisierungssignals ansteuerbar sind.

9. Steckverbindungssystem nach einem der vorgenannten Ansprüche, **dadurch gekennzeichnet, dass** das Visualisierungssignal der optischen Diagnose-Anzeigeeinheit (22) zur optischen Datenübertragung zusätzlich modulierbar ist.

10. Steckverbindungssystem nach einem der vorgenannten Ansprüche, **gekennzeichnet durch** eine weitere Schnittstelle (25) zur drahtlosen Datenkommunikation mit einer separaten Instanz.

11. Steckverbindungssystem mindestens nach Anspruch 2, **dadurch gekennzeichnet, dass** die mindestens eine Leuchtdiode (23, 24) der optischen Diagnose-Anzeigeeinheit (22) auf einer im Innern des Verbindungssystems angeordneten Leiterplatte (27) sitzt und das Visualisierungssignal über Fenster (29, 30) im Gehäuse (28) des Verbindungssystems von außen erkennbar ist.

12. Steckverbindungssystem nach Anspruch 11, **dadurch gekennzeichnet, dass** als Fenster ein Ringfenster (30) im sensorabseitigen Gehäuseabschnitt (31) des Verbindungssystems vorgesehen ist.

13. Steckverbindungssystem nach einem der vorgenannten Ansprüche, **dadurch gekennzeichnet, dass** das sensorseitige Verbindungselement ein Steckerelement (1) und das sensorabseitige Verbindungselement ein Buchsenelement (4) oder umgekehrt sind.

14. Steckverbindungssystem nach einem der vorgenannten Ansprüche, **dadurch gekennzeichnet, dass** das sensorseitige Verbindungselement (1) und die Sensoreinrichtung (2) fest miteinander verbunden sind.

15. Steckverbindungssystem nach einem der vorgenannten Ansprüche, **dadurch gekennzeichnet, dass** im sensorseitigen Verbindungselement (1) ein mit dem mindestens einen Messsensor (8, 9) signaltechnisch gekoppelter AD-Wandler (10) zur Digitalisierung des Messsignals vorgesehen ist.

16. Steckverbindungssystem nach einem der vorgenannten Ansprüche, **dadurch gekennzeichnet, dass** in beiden Verbindungselementen (1, 4) eine mikroprozessorgestützte Steuer- und Speichereinheit (11, 19) vorgesehen ist.

## Claims

1. Plug-in connection system for the contactless transmission of data and power supply signals between a sensor means (2) and a base unit in a measuring and transmission system, comprising
- a sensor-side connection element (1), on which a sensor means (2) is mounted, with
= a power signal receiver (12),
= a data modulator/demodulator unit (13) which can be coupled at least indirectly, for the purposes of signaling, to at least one measuring sensor (8, 9) of the sensor means, as well as
= a first coupling partner element (14) for the contactless transmission of data and power supply signals via a coupling path (15),
- a base-side connection element (4), to which a data and supply line (3) to a base unit is linked, with
= a second coupling partner element (16) of the coupling path (15),
= a power signal transmitter (17),
= a data modulator/demodulator unit (18),
= a data interface (20) which can be connected to the base unit with respect to data, as well as
= a primary power supply (21), and
- a microprocessor-assisted control and memory unit (19) in at least one of the connection elements (1, 4),
**characterized by**
- an optical diagnosis display unit (22) in at least one of the connection elements (4) for displaying state parameters within the measuring and transmission system.

2. Plug-in connection system according to claim 1, **characterized in that** the optical diagnosis display unit comprises at least one light-emitting diode (23, 24).

3. Plug-in connection system according to claim 1 or 2, **characterized in that** the optical diagnosis display unit (22) generates a signal representing the power supply state of the measuring and transmission system.

4. Plug-in connection system according to one of the preceding claims, **characterized in that** the optical diagnosis display unit (22) generates a signal representing the data transmission behavior of the measuring and transmission system.

5. Plug-in connection system according to one of the preceding claims, **characterized in that** the optical diagnosis display unit (22) generates a signal representing the state of the sensor of the measuring and transmission system.

6. Plug-in connection system according to claim 5, **characterized in that** the test routines for determining the state of the sensor can be initiated by the control and memory unit (11, 19) of one of the connection elements (1, 4).

7. Plug-in connection system according to one of the preceding claims, **characterized in that** differing state parameters of the measuring and transmission system can be displayed by differing coloring and/or flash frequency of the display signal of the diagnosis display unit (22).

8. Plug-in connection system according to claim 2, **characterized in that** there are provided in the optical diagnosis display unit (22) a plurality of light-emitting diodes which correspond to the basic colors and can be activated in accordance with the principle of the additive mixture of colors for generating a display signal of any color.

9. Plug-in connection system according to one of the preceding claims, **characterized in that** the display signal of the optical diagnosis display unit (22) can additionally be modulated for optical data transmission.

10. Plug-in connection system according to one of the preceding claims, **characterized by** a further interface (25) for the wireless communication of data to a separate entity.

11. Plug-in connection system according to claim 2, **characterized in that** the at least one light-emitting diode (23, 24) of the optical diagnosis display unit (22) is located on a printed circuit board (27) arranged in an interior of the connection system and the display signal is discernible from outside via windows (29, 30) in the housing (28) of the connection system.

12. Plug-in connection system according to claim 11, **characterized in that** the window provided is an annular window (30) in the sensor-remote housing portion (31) of the connection system.

13. Plug-in connection system according to one of the preceding claims, **characterized in that** the sensor-side connection element is a plug element (1) and the sensor-remote connection element is a socket element (4) or vice versa.

14. Plug-in connection system according to one of the preceding claims, **characterized in that** the sensor-side connection element (1) and the sensor means (2) are rigidly connected to each other.

15. Plug-in connection system according to one of the preceding claims, **characterized in that** there is provided in the sensor-side connection element (1), for digitizing the measurement signal, an A-D converter (10) coupled to the at least one measuring sensor (8, 9) for the purposes of signaling.

16. Plug-in connection system according to one of the preceding claims, **characterized in that** a microprocessor-supported control and memory unit (11, 19) is provided in both connection elements (1, 4).

## Revendications

1. S ystème de connexion enfichable pour la transmission sans contact de signaux de données et d'alimentation en énergie entre un dispositif de capteurs (2) et une unité de base dans un système de mesure et de transmission, comprenant :
- un élément de connexion (1) côté capteurs, sur lequel est fixé un dispositif de capteurs (2), comprenant :
= un récepteur de signaux d'énergie (12),
= une unité modulateur-démodulateur de données (13) pouvant être couplée au moins indirectement par signaux à au moins un capteur de mesure (8, 9) du dispositif de capteurs, ainsi que
= un premier élément partenaire de couplage (14) pour la transmission sans contact de signaux de données et d'alimentation en énergie via un trajet de couplage (15),
- un élément de connexion (4) côté base, auquel est couplée une ligne de données et d'alimentation (3) vers une unité de base, comprenant :
= un deuxième élément partenaire de couplage (16) du trajet de couplage (15),
= un émetteur de signaux d'énergie (17),
= une unité modulateur-démodulateur de données (18),
= une interface de données (20) qui peut être reliée pour transmission de données à l'unité de base, ainsi que
= une alimentation en énergie primaire (21), et
- une unité de commande et de mémoire (19) assistée par microprocesseur dans au moins l'un des éléments de connexion (1,4),
**caractérisé par**
- une unité d'affichage optique de diagnostic (22) dans au moins l'un des éléments de connexion (4) pour visualisation de paramètres d'état à l'intérieur du système de mesure et de transmission.

2. Système de connexion enfichable selon la revendication 1, **caractérisé en ce que** l'unité d'affichage optique de diagnostic comprend au moins une diode lumineuse (23, 24).

3. Système de connexion enfichable selon la revendication 1 ou 2, **caractérisé en ce que** l'unité d'affichage optique de diagnostic (22) génère un signal représentant l'état d'alimentation en énergie du système de mesure et de transmission.

4. Système de connexion enfichable selon l'une des revendications précédentes, **caractérisé en ce que** l'unité d'affichage optique de diagnostic (22) génère un signal représentant le comportement en transmission de données du système de mesure et de transmission.

5. Système de connexion enfichable selon l'une des revendications précédentes, **caractérisé en ce que** l'unité d'affichage optique de diagnostic (22) génère un signal représentant l'état des capteurs du système de mesure et de transmission.

6. Système de connexion enfichable selon la revendication 5, **caractérisé en ce que** les programmes de test pour la détermination de l'état des capteurs sont initialisables par l'unité de commande et de mémoire (11, 19) de l'un des éléments de connexion (1,4).

7. Système de connexion enfichable selon l'une des revendications précédentes, **caractérisé en ce que** différents paramètres d'état du système de mesure et de transmission peuvent être affichés par des couleurs et/ou une fréquence de clignotement différentes du signal de visualisation de l'unité d'affichage de diagnostic (22).

8. Système de connexion enfichable selon au moins la revendication 2, **caractérisé en ce que** sont prévues plusieurs diodes lumineuses correspondant aux couleurs de base dans l'unité d'affichage optique de diagnostic (22), qui peuvent être commandées selon le principe du mélange additif de couleurs pour générer un signal de visualisation d'une quelconque couleur.

9. Système de connexion enfichable selon l'une des revendications précédentes, **caractérisé en ce que** le signal de visualisation de l'unité d'affichage optique de diagnostic (22) est, en outre, modulable pour la transmission optique de données.

10. Système de connexion enfichable selon l'une des revendications précédentes, **caractérisé par** une autre interface (25) pour la communication de données sans fil avec une instance séparée.

11. Système de connexion enfichable selon au moins la revendication 2, **caractérisé en ce que** la au moins une diode lumineuse (23, 24) de l'unité d'affichage optique de diagnostic (22) repose sur une carte de circuit (27) disposée à l'intérieur du système de connexion et **en ce que** le signal de visualisation est détectable de l'extérieur via une fenêtre (29, 30) ménagée dans le boîtier (28) du système de connexion.

12. Système de connexion enfichable selon la revendication 11, **caractérisé en ce que** la fenêtre est une fenêtre annulaire (30) prévue dans la partie de boîtier (31) du système de connexion, située du côté opposé aux capteurs.

13. Système de connexion enfichable selon l'une des revendications précédentes, **caractérisé en ce que** l'élément de connexion côté capteurs est un élément mâle (1) et l'élément de connexion du côté opposé aux capteurs est un élément femelle (4) ou inversement.

14. Système de connexion enfichable selon l'une des revendications précédentes, **caractérisé en ce que** l'élément de connexion (1) côté capteurs et le dispositif de capteurs (2) sont rigidement reliés entre eux.

15. Système de connexion enfichable selon l'une des revendications précédentes, **caractérisé en ce que**, dans l'élément de connexion (1) côté capteurs, est prévu un convertisseur analogique-numérique (10) couplé par signaux au au moins un capteur de mesure (8, 9)pour la numérisation du signal de mesure.

16. Système de connexion enfichable selon l'une des revendications précédentes, **caractérisé en ce que**, dans les deux éléments de connexion (1, 4) est prévue une unité de commande et de mémoire (11, 19) assistée par microprocesseur.
